# EUROPEAN PATENT SPECIFICATION

(11) **EP 2 695 840 B1**
(45) Date of publication and mention of the grant of the patent: **11.05.2016**
(21) Application number: 11862914.6
(22) Date of filing: 04.04.2011
(51) Int. Cl.: B66B 3/00, B66B 1/14, G10L 15/06, B66B 1/46, G10L 15/22

(54) **DESTINATION FLOOR REGISTRATION DEVICE FOR ELEVATOR**
VORRICHTUNG ZUR REGISTRIERUNG DES ZIELSTOCKWERKS FÜR EINEN AUFZUG
DISPOSITIF D'ENREGISTREMENT D'ÉTAGE DE DESTINATION POUR ASCENSEUR

(43) Date of publication of application: 12.02.2014
(73) Proprietor: Mitsubishi Electric Corporation, Tokyo 100-8310 (JP)
(72) Inventor: IIO, Mitsutoshi, Nagoya-shi Aichi 461-8670 (JP)
(74) Representative: Hoffmann Eitle
(86) International application number: PCT/JP2011/058505
(87) International publication number: WO 2012/137284

(56) References cited:
- JP-A- 2002 128 404
- JP-A- 2007 213 005
- JP-A- 2009 202 993
- JP-A- 2010 168 211

## Description

### Technical Field

The present invention relates to a destination floor registration device of an elevator.

### Background Art

In an elevator which performs car call registrations by button operations, car call registrations by button operations are sometimes difficult, for example, in the case where the sense of sight of a user is inadequate, in the case where a user carries things, and in the case where the elevator is very crowded. Therefore, there has hitherto been known a destination floor registration device of an elevator which permits destination call registrations by voice input without requiring manual button operations. When a voice uttered by a user is inputted to a voice input section, such as a microphone, this destination floor registration device of an elevator recognizes the inputted voice and performs a destination floor registration to a destination floor spoken by the user and the like.

As such a destination floor registration device of an elevator which performs destination floor registration by voice recognition using a voice input section which receives the input of a voice uttered by an elevator user, there have hitherto been known those described in Patent Literature 1 and Patent Literature 2, for example. In these destination floor registration devices described Patent Literature 1 and Patent Literature 2, a destination floor vocabulary dictionary in which a plurality of words representing destination floors are registered is provided beforehand, and a voice which is inputted is compared with and checked against the words the words registered in this destination floor vocabulary dictionary, whereby it is ascertained to which destination floor the inputted voice belongs. For the reason that, for example, it is ensured that this destination floor vocabulary dictionary can be shared in many buildings, a sufficiently large number of floor names are often registered beforehand in this destination floor vocabulary dictionary so that all floors of an ordinary building, for example, the 1st floor to 99th floor can be covered.

There have hitherto been known destination floor registration devices in which words representing facilities, company departments, stores and the like on each floor and synonyms of such words are registered beforehand along with floor names in a destination floor vocabulary dictionary so that a call to a destination floor desired by a user can be registered when the user utters not only a floor name, but also the name of a facility and the like on the floor desired by the user (refer to Patent Literature 3, for example).

### Citation List

### Patent Literature

Patent Literature 1: Japanese Patent Laid-Open No.03-284589
Patent Literature 2: Japanese Patent Laid-Open No.04-298464
Patent Literature 3: Japanese Patent Laid-Open No.2002-128404

JP 2010-168211 A discloses an elevator call registering device according to the preamble of claim 1.

### Summary of Invention

### Technical Problem

However, in these conventional destination floor registration devices of an elevator, a sufficiently large number of floor names, for example, the 1st floor to 99th floor are registered beforehand in a destination floor vocabulary dictionary and, therefore, in the building in which the relevant elevator is installed, floor names which do not exist and floor names of non-service floors of the relevant elevator (floors at which the elevator cannot stop) are registered in a destination floor vocabulary dictionary. For example, although in the building in which the relevant elevator is installed only the 1 st floor to 10th floor exist, the 11 th floor is registered in the destination floor vocabulary dictionary and the 2nd floor is registered in the destination floor vocabulary dictionary although setting is performed in such a manner that the relevant elevator does not serve the 2nd floor.

And because floor names incapable of being selected are registered in the destination floor vocabulary dictionary like this, there occurs a problem that although a user uttered a floor name capable of being selected as a destination floor, the floor name is erroneously recognized as a floor name incapable of being selected as a destination floor. The occurrence rate of this erroneous recognition is high in the case where although a floor name whose pronunciation is very similar to the floor name uttered by the user cannot be selected as a destination floor, this floor name is registered in the destination floor vocabulary dictionary.

In contrast to this, in the case where according to the number of floors of a building in which an elevator is installed and the setting of service floors of the relevant elevator, a destination floor vocabulary dictionary in which floor names capable of being selected as destination floors of the relevant elevator are registered is separately provided, this poses the problem that the setting of a destination floor vocabulary dictionary requires complicated trouble.

The present invention has been made to solve such problems and provides a destination floor registration device of an elevator capable of increasing the recognition rate by suppressing the occurrence of erroneous recognition without requiring complicated trouble in the setting of a destination floor vocabulary dictionary.

### Means for Solving the Problems

A destination floor registration device of an elevator according to the present invention, which performs a call registration by voice recognition using a voice input section which receives the input of a voice uttered by a user of the elevator, comprises: a storage section which stores a destination floor vocabulary dictionary in which voice data of predetermined destination floor words representing destination floors of call registrations are registered in a plurality of numbers; an elevator information obtaining section which obtains from the elevator an elevator status including at least information on service possible floors and service impossible floors of the elevator; an automatic dictionary setting section which automatically sets, for each of the destination floor words registered in the destination floor vocabulary dictionary, whether or not the destination floor word is used in the voice recognition on the basis of the elevator status obtained by the elevator information obtaining section; a voice recognition section which performs the voice recognition by judging whether or not a voice inputted to the voice input section matches the voice data of any of destination floor words which are set by the dictionary setting section to be used in the voice recognition among the destination floor words of the destination floor vocabulary dictionary; and a destination floor registration section which, in the case where the voice inputted to the voice input section is judged to match the voice data of the destination floor word, outputs to an elevator control section a request for the registration of a call to a destination floor represented by the relevant matched destination floor word.

### Advantageous Effects of Invention

The destination floor registration device of an elevator of the present invention produces the effect that the recognition rate can be increased by suppressing the occurrence of erroneous recognition without requiring complicated trouble in the setting of a destination floor vocabulary dictionary.

### Brief Description of the Drawings

Figure 1 is a block diagram showing the general configuration of the call registration device of an elevator relating to Embodiment 1 of the present invention.
Figure 2 is a diagram showing an example of setting a vocabulary dictionary of the call registration device of an elevator relating to Embodiment 1 of the present invention.
Figure 3 is a flowchart showing the actions of the call registration device of an elevator relating to Embodiment 1 of the present invention.
Figure 4 is a block diagram showing the general configuration of the call registration device of an elevator relating to Embodiment 2 of the present invention.
Figure 5 is a diagram showing an example of setting a vocabulary dictionary of the call registration device of an elevator relating to Embodiment 2 of the present invention.
Figure 6 is a flowchart showing the actions of the call registration device of an elevator relating to Embodiment 2 of the present invention.
Figure 7 is a diagram showing an example of setting a vocabulary dictionary of the call registration device of an elevator relating to Embodiment 2 of the present invention.

### Description of Embodiments

The present invention will be described in accordance with the accompanying drawings. In each of the drawings, like numerals refer to like or corresponding parts and overlaps of description of these parts are appropriately simplified or omitted.

### Embodiment 1

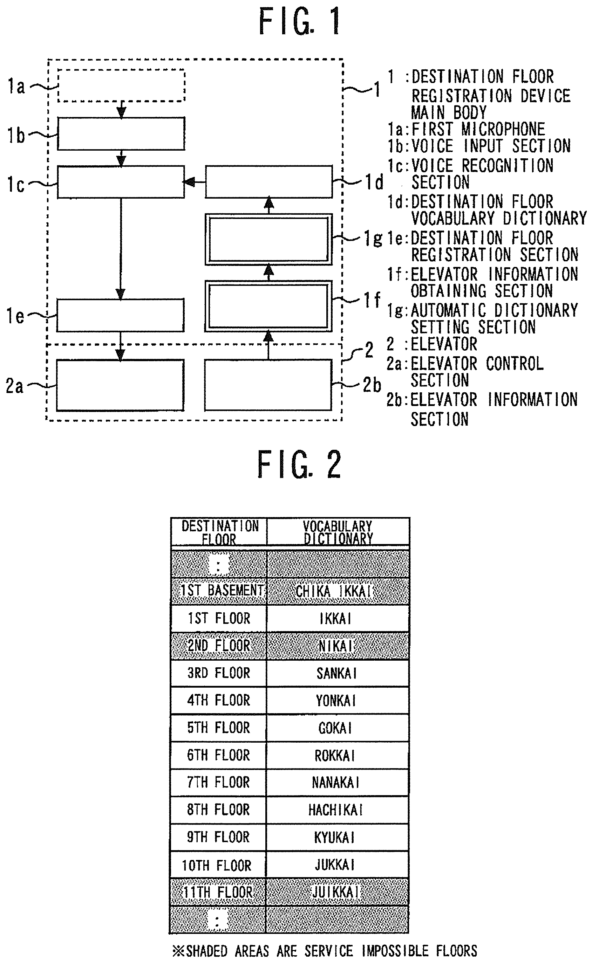

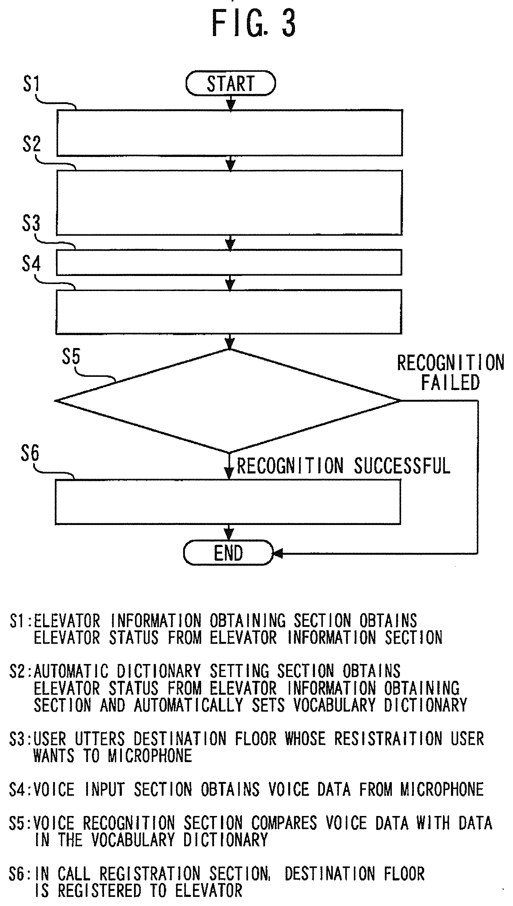

Figures 1 to 3 relate to Embodiment 1 of the present invention. Figure 1 is a block diagram showing the general configuration of the call registration device of an elevator, Figure 2 is a diagram showing an example of setting a vocabulary dictionary of the call registration device of an elevator, and Figure 3 is a flowchart showing the actions of the call registration device of an elevator.

In Figure 1, reference numeral 1 denotes a destination floor registration device main body for registering a call to a destination floor desired by an elevator user. This destination floor registration device main body 1 is installed in either or both of an elevator car, which is not shown, and a hall, which is not shown.

The destination floor registration device main body 1 is provided with a first microphone 1a and a voice input section 1b, which are intended for receiving a voice uttered by a user. The voice uttered by the user is taken in by the first microphone 1a. A sound wave taken in by the first microphone 1 a is converted to an electrical signal. And the electrical signal from the first microphone 1a is converted to a voice signal by being subjected to predetermined processing by the voice input section 1b and is then outputted.

The voice signal outputted from the voice input section 1b is inputted to a voice recognition section 1c provided in the destination floor registration device main body 1. The voice recognition section 1c performs voice recognition processing by performing comparative checking of the voice inputted to the voice input section 1b against voice data of predetermined destination floor words registered in a destination floor vocabulary dictionary 1d. Contents registered in the destination floor vocabulary dictionary 1d are voice data (waveform data of voices) of a plurality of destination floor words, which are predetermined words representing the destination floors of call registration (for example, "ikkai" representing the first floor and "nikai" representing the second floor). The destination floor vocabulary dictionary 1d is stored in a storage section provided in the destination floor registration device main body 1. The contents of the destination floor vocabulary dictionary 1d are automatically set and updated beforehand, as will be described later.

The voice recognition section 1c first cuts out an utterance division which is a voice section uttered by a user from the voice signal outputted from the voice input section 1b. And the voice recognition section 1c performs the comparative checking of the voice signal of this cut-out utterance division against the voice signal of the voice data of destination floor words registered in the destination floor vocabulary dictionary 1d, thereby performing voice recognition by determining whether or not the voice inputted to the voice input section 1b matches any of the voice data of the destination floor words.

Results of the voice recognition by this voice recognition section 1c are outputted to a destination floor registration section 1e provided in the destination floor registration device main body 1. The destination floor registration section 1e outputs a call registration request to an elevator 2 on the basis of the results of the voice recognition outputted from the voice recognition section 1c. Specifically, in the case where results of the voice recognition in the voice recognition section 1c reveal that the voice inputted to the voice input section 1b matched a destination floor word (the voice recognition was successful), the destination floor registration section 1e outputs to the elevator 2 a request for the registration of a call to the matched destination floor.

The elevator 2 is provided with an elevator control section 2a which controls, in particular, the operation of an elevator car (registration of a call, response to a call and the like). A call registration request outputted from a call registration control section 3c is inputted to the elevator control section 2a of the elevator 2. The elevator control section 2a performs a call registration to a destination floor designated by this inputted call registration request.

On the other hand, in the case where although a voice was inputted to the voice input section 1b, the inputted voice did not match any of the destination floor words registered in the destination floor vocabulary dictionary 1d and no destination floor word was recognized by the voice recognition section 1c (the voice recognition was unsuccessful), the destination floor registration section 1e does not output a call registration request and hence a call registration is not performed.

The elevator 2 is provided with an elevator information section 2b which keeps and controls information regarding a status of the relevant elevator (hereinafter referred to "an elevator status"). The information on the elevator status kept and controlled by this elevator information section 2b includes information on each floor of the building in which the relevant elevator is installed, and information on service possible floors, which are served by the relevant elevator, and service impossible floors which are not served by the relevant elevator.

An elevator information obtaining section If provided in the destination floor registration device main body 1 obtains an elevator status from the elevator information section 2b of the elevator 2. And an automatic dictionary setting section 1g provided in the destination floor registration device main body 1 sets the destination floor vocabulary dictionary 1d on the basis of the elevator status obtained by the elevator information obtaining section If. A concrete example of the setting of this destination floor vocabulary dictionary 1d is shown in Figure 2. In the destination floor vocabulary dictionary 1d, for each of the destination floors, a destination floor word representing the relevant destination floor is registered beforehand.

Specifically, "chika ikkai" as a destination floor word representing the destination floor the 1st basement, "ikkai" as a destination floor word representing the 1st floor (above the ground,) similarly, "nikai" as a destination floor word representing the 2nd floor, "sankai" as a destination floor word representing the 3rd floor, "yonkai" as a destination floor word representing the 4th floor, "gokai" as a destination floor word representing the 5th floor, "rokkai" as a destination floor word representing the 6th floor, "nanakai" as a destination floor word representing the 7th floor, "hachikai" as a destination floor word representing the 8th floor, "kyukai" as a destination floor word representing the 9th floor, "jukkai" as a destination floor word representing the 10th floor, and "juikkai" as a destination floor word representing the 11th floor are each registered beforehand in the destination floor vocabulary dictionary 1d.

Although not explicitly shown in Figure 2, also for the 2nd basement and lower as well as the 12th floor and higher, in the same manner as with the 1st basement to the 11th floor above the ground, respective destination floor words are registered beforehand in the destination floor vocabulary dictionary 1d.

In this manner, destination floor words representing destination floors are registered beforehand in the destination floor vocabulary dictionary 1d. And the automatic dictionary setting section 1g automatically sets each of the destination floor words registered in this destination floor vocabulary dictionary 1d in such a manner as to be used or not to be used in voice recognition by the voice recognition section 1c on the basis of the elevator status obtained by the elevator information obtaining section If.

Specifically, in the case where a destination floor is a service possible floor, a destination floor word representing the relevant destination floor is set in such a manner as to be used in voice recognition by the voice recognition section 1c. In the case where a destination floor is a service impossible floor, a destination floor word representing the relevant destination floor is set in such a manner as not to be used in voice recognition by the voice recognition section 1c. For floors which do not exist in a building where the relevant elevator is installed, such floors are regarded as service impossible floors. Capable of being served is equivalent in meaning to that a user can select the floor as a destination floor of destination floor call registration. Inversely, incapable of being served is equivalent in meaning to that a user cannot select the floor as a destination floor of destination floor call registration.

Referring to Figure 2, a description will be given of a concrete example in which the destination floor vocabulary dictionary 1d is automatically set by this automatic dictionary setting section 1g. In Figure 2, the hatched portions indicate destination floor words which are set in such a manner as not to be used in voice recognition by the voice recognition section 1c. And the portions which are not hatched indicate destination floor words which are set in such a manner as to be used in voice recognition by the voice recognition section 1c.

That is, specifically, first, the floors lower than the 1st basement to the floors higher than the 11 th floor are floors which do not exist in the building where the relevant elevator is installed. Therefore, the destination floor words representing these destination floors are set in such a manner as not to be used in voice recognition by the voice recognition section 1c. In this example, the 2nd floor is a floor which is not served by the relevant elevator and, therefore, also the destination floor word representing this 2nd floor is set in such a manner as not to be used in voice recognition by the voice recognition section 1c. On the other hand, the 1st floor and the 3rd floor to the 10th floor are set in such a manner as to be used in voice recognition by the voice recognition section 1c, because these floors are floors served by the relevant elevator.

The obtaining of an elevator status from the elevator information section 2b by the elevator information obtaining section 1f and the setting of the destination floor vocabulary dictionary 1d by the automatic dictionary setting section 1g on the basis of the elevator status are carried out when the power supply to the destination floor registration device main body 1 is activated. Furthermore, at predetermined constant time intervals, the obtaining of the elevator status and the setting and renewal of the destination floor vocabulary dictionary 1d are periodically carried out.

In this embodiment, the destination floor registration device of an elevator acts according to the series of actions of flow shown in Figure 3.

First, in Step S1, the elevator information obtaining section If obtains an elevator status from the elevator information section 2b of the elevator 2. Next, in Step S2, the automatic dictionary setting section 1g obtains the elevator status obtained in preceding Step S1 from the elevator information obtaining section If and automatically sets the destination floor vocabulary dictionary 1d of the destination floor registration device main body 1 on the basis of this obtained elevator status. As described above, Step S1 and Step S2 are carried out at the power activation and periodically.

And when in Step S3 a user utters a destination floor for which the user wants to register a call to the first microphone 1a, in succeeding Step S4, the voice input section 1b obtains voice data inputted to the first microphone 1a in Step S3. And in Step S5 the voice recognition section 1c performs comparative checking of the voice data inputted to the voice input section 1b against the destination floor words of the destination floor vocabulary dictionary 1d.

On this occasion, the destination floor words of the destination floor vocabulary dictionary 1d which are used in this voice recognition, that is, which are compared with and checked against the voice data inputted to the voice input section 1b are those set by the automatic dictionary setting section 1g in preceding Step S2 in such a manner as to be used in voice recognition. In other words, the voice recognition section 1c performs voice recognition by performing comparative checking of the voice data inputted to the voice input section 1b against the destination floor words of the destination floors capable of being selected as destination floors.

And in the case where this voice recognition was successful, that is, in the case where the voice inputted to the voice input section 1b matched a destination floor word which was set in the destination floor vocabulary dictionary 1d in such a manner as to be used in voice recognition, the flow of actions proceeds to Step S6. In Step S6, the destination floor registration section 1e outputs to the elevator 2 a call registration request to a destination floor represented by this matched destination floor word, and the elevator control section 2a performs a call registration to the destination floor designated by this call registration request. And the series of actions of flow are finished.

On the other hand, in the case where in Step S5 this voice recognition was unsuccessful, that is, in the case where the voice inputted to the voice input section 1b did not match a destination floor word which was set in the destination floor vocabulary dictionary 1d in such a manner as to be used in voice recognition, the destination floor call is not registered and the series of actions of flow are finished.

In this manner, for destination floor words representing service impossible floors of the relevant elevator, so that these destination floor words do not become the object of comparative checking in voice recognition, the destination floor vocabulary dictionary 1d is automatically set by the automatic dictionary setting section 1g prior to voice recognition. Therefore, in the case where the destination floor word of a service possible floor has a pronunciation similar to that of the destination floor word of a service impossible floor, it is possible to prevent the service possible floor from being erroneously recognized as this service impossible floor. Destination floor words "having pronunciations similar to each other" refer to words in which as with "gokai" representing the 5th floor and "rokkai" representing the 6th floor, for example, though the consonants of the beginning of the words are different ("g" and "r"), the following pronunciation is common to both ("ok(k)ai" although there is a minute difference as to whether a double consonant is included or not). In this manner, it can be said that the possibility that words having similar pronunciations are erroneously recognized in voice recognition is generally high.

In the example of this embodiment, also "ikkai" representing the 1st floor and "nikai" representing the 2nd floor, for example, are destination floor words "having pronunciations similar to each other." However, in this example, the 2nd floor is a service impossible floor and hence the destination floor word of "nikai" is set in such a manner as not to be used in voice recognition. Therefore, in the case where a user intended to utter "ikkai" (the 1 st floor), this pronunciation of the user is not erroneously recognized as "nikai" (the 2nd floor) and it is possible to prevent a decrease in the recognition rate.

The destination floor registration device of an elevator configured as described is such that an elevator status including at least information on service possible floors and service impossible floors of the elevator is obtained by the elevator information obtaining section and that each of the destination floor words registered in the destination floor vocabulary dictionary is set by the automatic dictionary setting section in such a manner as to be used or not to be used in voice recognition by the voice recognition section on the basis of the elevator status obtained by the elevator information obtaining section.

And in the voice recognition section, voice recognition is performed by determining whether or not a voice inputted to the voice input section matches voice data of a destination floor word which is set by the dictionary setting section in such a manner as to be used in the voice recognition among the destination floor words of the destination floor vocabulary dictionary.

Therefore, it is possible to automatically set the contents of the destination floor vocabulary dictionary according to the condition of a building in which the elevator is installed and the service status of the elevator so that destination floor words incapable of being call registration as destination floors are not used in voice recognition. And for this reason, it is possible to increase the recognition rate by suppressing the occurrence of erroneous recognition without requiring complicated trouble in the setting of the destination floor vocabulary dictionary.

### Embodiment 2

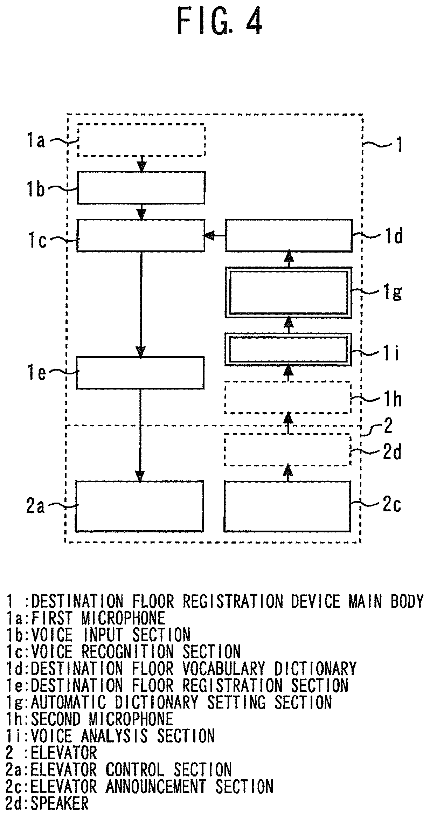

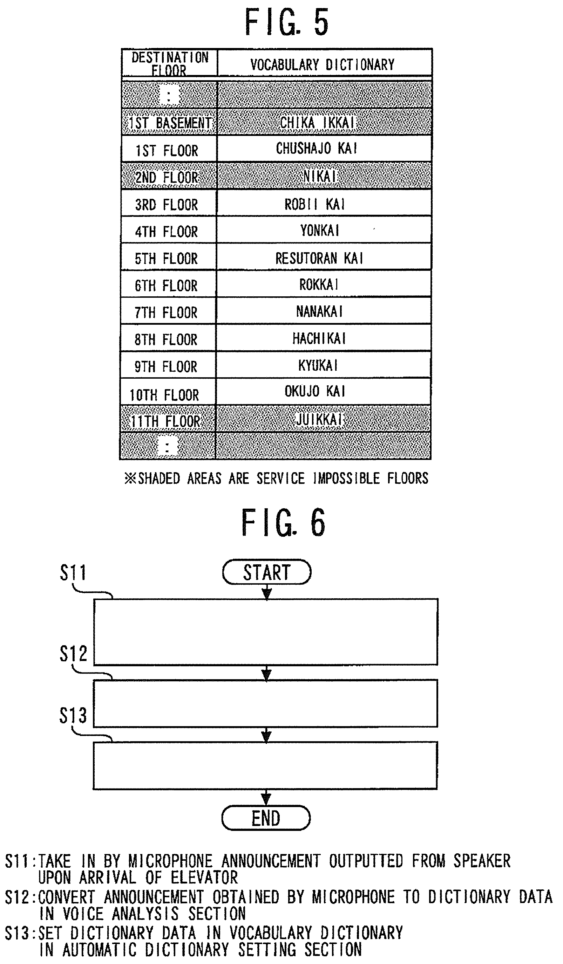

Figures 4 to 6 relate to Embodiment 2 of the present invention. Figure 4 is a block diagram showing the general configuration of the call registration device of an elevator, Figure 5 is a diagram showing an example of setting a vocabulary dictionary of the call registration device of an elevator, and Figure 6 is a flowchart showing the actions of the call registration device of an elevator.

In Embodiment 1 described above, a destination floor vocabulary dictionary is automatically set on the basis of an elevator status obtained from the elevator. In contrast to this, in Embodiment 2 which is described here, an announcement made from an announcement section of an elevator through a speaker is taken in by a microphone of a destination floor registration device main body and the contents of the announcement are analyzed and set as destination floor words used in a destination floor vocabulary dictionary.

In this Embodiment 2, as shown in Figure 4, an elevator 2 is provided with an elevator announcement section 2c for announcing a service floor to users in a car. When a car stops at a service floor, this elevator announcement section 2c outputs the name of the relevant service floor as a service floor guiding announcement. And the service floor guiding announcement outputted from the elevator announcement section 2c is made from a speaker 2d provided in the car to the inside of the car.

As names of service floors usually announced, in addition to names, each composed of a combination of a numeral and word of "floor (kai)," which are in general use, there are special floor names using main facilities and the like present on the floor in question, for example, "the lobby floor," "the restaurant floor," and "the rooftop floor."

In this Embodiment 2, a destination floor registration device main body 1 is installed in a car of the elevator. And the destination floor registration device main body 1 is provided with a second microphone 1h which takes in the service floor guiding announcement made from the speaker 2d to the inside of the car. The voice taken in by a second microphone 1a is converted to an electrical signal. And the electrical signal outputted from the second microphone 1a is inputted to a voice analysis section 1i provided in the destination floor registration device main body 1.

This voice analysis section 1i analyzes the voice taken in by the second microphone 1h and extracts a word represented by the relevant voice. And the voice analysis section 1i converts the relevant extracted word to a data format capable of being registered as a destination floor word of a destination floor vocabulary dictionary 1d and outputs the data format as voice data. An automatic dictionary setting section 1g sets this voice data outputted from this voice analysis section 1i in the destination floor vocabulary dictionary 1d as voice data of a destination floor word representing the relevant destination floor in the case where the present service floor is the destination floor.

A concrete example of the contents of setting of this destination floor vocabulary dictionary 1d is shown in Figure 5. Here, "chika ikkai" as a destination floor word representing the destination floor the 1st basement, "chushajo kai" (the parking floor) as a destination floor word representing the 1st floor (above the ground,) similarly, "nikai" as a destination floor word representing the 2nd floor, "robii kai" (the lobby floor) as a destination floor vocabulary representing the 3rd floor, "yonkai" as a destination floor word representing the 4th floor, "resutoran kai" (the restaurant floor) as a destination floor word representing the 5th floor, "rokkai" as a destination floor word representing the 6th floor, "nanakai" as a destination floor word representing the 7th floor, "hachikai" as a destination floor word representing the 8th floor, "kyukai" as a destination floor word representing the 9th floor, "okujo kai"(the penthouse) as a destination floor word representing the 10th floor, and "juikkai" as a destination floor word representing the 11th floor are each registered beforehand in the destination floor vocabulary dictionary 1d.

As described above, in this example, as destination floor words representing the 1st floor, the 3rd floor, the 5th floor, and the 10th floor, special floor names using main facilities and the like present on the floors, "chushajo kai" (the parking floor), "robi kai" (the lobby floor), "resutoran kai" (the restaurant floor), and "okujo kai"(the penthouse), respectively, are set. As with Embodiment 1, the 2nd floor as well as floors lower than the first basement and floors higher than the 11th floor, which do not exist in the building where the relevant elevator is installed, are set in such a manner as not to be used in voice recognition by the voice recognition section 1c as service impossible floors.

The setting of the destination floor vocabulary dictionary of the destination floor registration device of the elevator in this embodiment is carried out according to a series of actions of flow shown in Figure 6.

First, in Step S11 the second microphone 1h of the destination floor registration device main body 1 takes in a service floor guiding announcement made by the speaker 2d to the inside of the car when the elevator 2 stops at a service floor.

Next, in Step S12 the voice taken in by the second microphone 1h in Step S11 is analyzed, the word represented by the relevant voice is extracted, and the relevant extracted word to dictionary data (voice data for dictionary registration). And in succeeding Step S13, the automatic dictionary setting section 1g sets the dictionary data obtained in preceding Step S12 in the destination floor vocabulary dictionary I d as a destination floor word.

The flow of actions of this Figure 6 corresponds to steps S1 and S2 of the flowchart of Figure 3 of Embodiment 1, and these actions are carried out at least once prior to the voice recognition of a voice uttered by a user. For example, the car is operated so that the car stops in order at all service possible floors at the time of completion of the installation of the relevant elevator and the flow of actions of Figure 6 is carried out on this occasion, whereby the destination floor vocabulary dictionary 1d is automatically set. And a user inputs a voice to the first microphone 1 a, with the automatic setting of the destination floor vocabulary dictionary 1d in a completed condition, whereby the actions of Steps S3 to S6 of the flowchart of Figure 3 (voice recognition) are carried out.

Other configurations and actions are the same as in Embodiment 1.

In the destination floor registration device of an elevator configured as described above, it is possible to automatically set special floor names using floor information of main facilities and the like present on the floor in question as destination floor words and it is ensured that the voice input of a destination floor can be performed also by a special floor name using floor information. Therefore, in the case where destination floor words, each composed of a combination of a numeral and the word "floor," which is in general use, are used, even when numerals are similar to each other, it is possible to prevent erroneous recognition by performing the voice input of a destination floor also by a special floor name using floor information.

In this embodiment, the second microphone 1h for taking in announcements and the first microphone 1a for taking in voices uttered by a user may be configured using the same microphone. Also the voice input section 1b and the voice analysis section 1i may be integrated into one.

Destination floor words, each composed of a combination of a numeral and the word "floor," which is in general use, may be registered beforehand in the destination floor vocabulary dictionary 1d, or may be automatically set by the automatic dictionary setting section 1g in the destination floor vocabulary dictionary 1d by taking in announcements from the speaker 2d.

### Embodiment 3

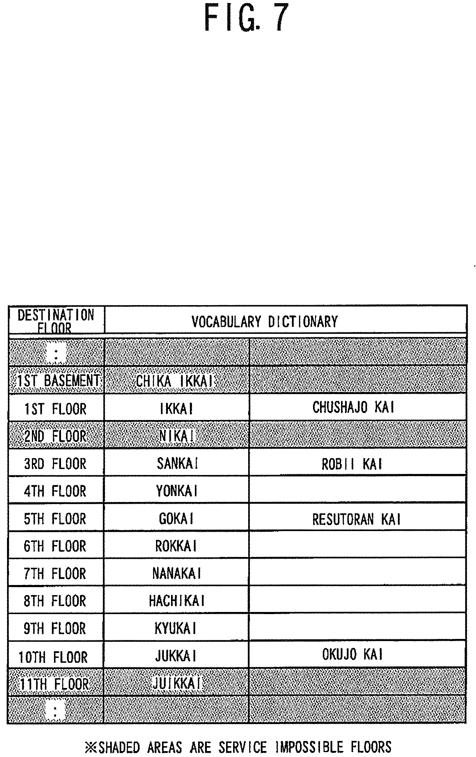

Figure 7 relates to Embodiment 3 of the present invention and is a diagram showing an example of setting a vocabulary dictionary of the call registration device of an elevator.

In Embodiment 3 which is described here, it is ensured that a plurality of destination floor words can be registered for one destination floor in the destination floor vocabulary dictionary. Figure 7 shows a concrete example of the contents of setting the destination floor vocabulary dictionary 1d in Embodiment 3. At first, a floor name composed of a combination of a numeral and the word "floor" as used in Embodiment 1 is registered for each destination floor. And furthermore, for a destination floor for which a special floor name using a main facility and the like is present on the floor, a special floor name as used in Embodiment 2 is also set.

Specifically, the two destination floor words of "ikkai" (the 1st floor) and "chushajo kai" (the parking floor) are set for the 1st floor. Similarly, the two destination floor words of "sankai" (the 3rd floor) and "robi kai" (the lobby floor) are set for the 3rd floor, the two destination floor words of "gokai" (the 5th floor) and "resutoran kai" (the restaurant floor) are set for the 5th floor, and the two destination floor words of "jukkai" (the 10th floor) and "okujo kai"(the penthouse) are set for the 10th floor.

Other configurations and actions are the same as in Embodiment 1 and Embodiment 2 and detailed descriptions thereof are omitted.

In Embodiment 3 in which the destination floor vocabulary dictionary is set as described above, by using either a usual floor name composed of a combination of a numeral and the word "floor" or a special floor name using a main facility and the like present on the floor for one destination floor, it is possible to register a call to the destination floor.

In this embodiment, the description has been given of the example in which there are set a plurality of destination floor words: a usual floor name composed of a combination of a numeral and the word "floor" and a special floor name using a main facility and the like present on the floor, for one destination floor. In this respect, a plurality of destination floor words of usual floor name, each composed of a numeral and the word "floor," may be set for one destination floor. Or for one destination floor, a plurality of destination floor words of special floor name using a main facility and the like present on the floor may be set. As the former example, for instance, the two destination floor words of "nanakai" and "shichikai", both meaning the 7th floor as the destination floor, may be set.

### Industrial Applicability

The present invention can be used in a destination floor registration device of an elevator which performs a call registration by voice recognition using a voice input section which receives the input of a voice uttered by a user of the elevator.

### Description of Symbols

- 1: destination floor registration device main body
- 1a: first microphone
- 1b: voice input section
- 1c: voice recognition section
- 1d: destination floor vocabulary dictionary
- 1e: destination floor registration section
- 1f: elevator information obtaining section
- 1g: automatic dictionary setting section
- 1h: second microphone
- 1i: voice analysis section
- 2: elevator
- 2a: elevator control section
- 2b: elevator information section
- 2c: elevator announcement section
- 2d: speaker

## Claims

1. A destination floor registration device of an elevator which performs a call registration by voice recognition using a voice input section (1b) which receives the input of a voice uttered by a user of the elevator, comprising:
a storage section which stores a destination floor vocabulary dictionary (1d) in which voice data of predetermined destination floor words representing destination floors of call registrations are registered in a plurality of numbers;
an elevator information obtaining section (1f) which obtains from the elevator an elevator status including at least information on service possible floors and service impossible floors of the elevator;
an automatic dictionary setting section (1g) which automatically sets, for each of the destination floor words registered in the destination floor vocabulary dictionary (1d), whether or not the destination floor word is used in the voice recognition on the basis of the elevator status obtained by the elevator information obtaining section (If);
a voice recognition section (1c) which performs the voice recognition by judging whether or not a voice inputted to the voice input section (1b) matches the voice data of any of destination floor words which are set by the automatic dictionary setting section (1g) to be used in the voice recognition among the destination floor words of the destination floor vocabulary dictionary (1d);
a destination floor registration section (1e) which, in the case where the voice inputted to the voice input section (1b) is judged to match the voice data of the destination floor word, outputs to an elevator control section a request for the registration of a call to a destination floor represented by the relevant matched destination floor word; and
a microphone (1h) which is provided in a car of the elevator and takes in a service floor guiding announcement made in the car upon arrival of the car at a service floor,
**characterized in that** the automatic dictionary setting section (1g) sets the destination floor words of the destination floor vocabulary dictionary (1d) used in the voice recognition on the basis of the service floor guiding announcement taken in by the microphone (1h).

## Patentansprüche

1. Zielstockwerk-Registrierungsvorrichtung eines Aufzugs, die eine Rufregistrierung durch Spracherkennung unter Verwendung eines Spracheingabeabschnitts (1b) durchführt, der die Eingabe einer Sprache empfängt, die durch einen Benutzer des Aufzugs geäußert wird, umfassend:
einen Speicherabschnitt, der ein Zielstockwerk-Wortschatz-Wörterbuch (1d) speichert, in dem Sprachdaten vorbestimmter Zielstockwerkwörter, die Zielstockwerke von Rufregistrierungen darstellen, in einer Vielzahl von Nummern registriert sind;
einen Aufzugsinformations-Erhaltungsabschnitt (1f), der von dem Aufzug einen Aufzugsstatus erhält, einschließlich zumindest einer Information über mögliche Dienststockwerke und nicht mögliche Dienststockwerke des Aufzugs;
einen automatischen Wörterbucheinstellabschnitt (1g), der für jedes der Zielstockwerkwörter, die in dem Zielstockwerk-Wortschatz-Wörterbuch (1d) registriert sind, automatisch einstellt, ob oder ob nicht das Zielstockwerkwort in der Spracherkennung verwendet wird, auf Grundlage des durch den Aufzugsinformations-Erhaltungsabschnitt (1f) erhaltenden Aufzugsstatus;
einen Spracherkennungsabschnitt (1c), der die Spracherkennung durch Beurteilen durchführt, ob oder ob nicht eine in den Spracheingabeabschnitt (1b) eingegebene Sprache mit den Sprachdaten von einem von
Zielstockwerkwörtern übereinstimmt, die durch den automatischen Wörterbucheinstellabschnitt (1g) zur Verwendung in der Spracherkennung eingestellt sind, unter den Zielstockwerkwörtern des Zielstockwerk-Vokabelwörterbuchs (1d);
einen Zielstockwerk-Registrierungsabschnitt (1e), der für den Fall, dass die in den Spracheingabeabschnitt (1b) eingegebene Sprache als übereinstimmend mit den Sprachdaten des Zielstockwerkwortes beurteilt wird, an einen Aufzugssteuerabschnitt eine Anforderung für die Registrierung eines Rufs zu einem Zielstockwerk ausgibt, das durch das relevante übereinstimmende Zielstockwerkwort dargestellt wird; und
ein Mikrofon (1h), das bereitgestellt ist in einer Kabine des Aufzugs und eine Dienststockwerk-FÜhrungsnachricht aufnimmt, die bei Ankunft der Kabine an einem Dienststockwerk erfolgt,
**dadurch gekennzeichnet, dass** der automatische Wörterbucheinstellabschnitt (1g) die Zielstockwerkwörter des Zielstockwerk-Wortschatz-Wörterbuchs (1d), das bei der Spracherkennung verwendet wird, auf Grundlage der Dienststockwerk-Führungsnachricht einstellt, die durch das Mikrofon (1h) aufgenommen wird.

## Revendications

1. Dispositif d'enregistrement d'étage de destination d'un ascenseur qui effectue un enregistrement d'appel par reconnaissance vocale en utilisant une section d'entrée vocale (1b) qui reçoit la saisie d'une voix émise par un utilisateur de l'ascenseur, comprenant :
une section de stockage qui stocke un dictionnaire de vocabulaire d'étages de destination (1d), dans lequel des données vocales de mots d'étages de destination prédéterminés représentant des étages de destination d'enregistrements d'appel sont enregistrées dans une pluralité de numéros ;
une section d'obtention d'informations d'ascenseur (1f) qui obtient de l'ascenseur un état d'ascenseur comprenant au moins des informations sur des étages de service possible et des étages de service impossible de l'ascenseur ;
une section d'établissement automatique de dictionnaire (1g) qui établit automatiquement, pour chacun des mots d'étages de destination enregistrés dans le dictionnaire de vocabulaire d'étages de destination (1d), si le mot d'étage de destination est ou non utilisé dans la reconnaissance vocale sur la base de l'état d'ascenseur obtenu par la section d'obtention d'informations d'ascenseur (1f) ;
une section de reconnaissance vocale (1c) qui effectue la reconnaissance vocale en jugeant si une voix saisie dans la section d'entrée vocale (1b) correspond ou non aux données vocales de l'un quelconque des mots d'étages de destination qui sont établis par la section d'établissement automatique de dictionnaire (1g) à utiliser dans la reconnaissance vocale parmi les mots d'étages de destination du dictionnaire de vocabulaire d'étages de destination (1d) ;
une section d'enregistrement d'étages de destination (le) qui, dans le cas où la voix saisie dans la section d'entrée vocale (1b) est jugée comme correspondant aux données vocales du mot d'étage de destination, délivre à une section de commande d'ascenseur une demande d'enregistrement d'un appel à un étage de destination représenté par le mot d'étage de destination concordant pertinent ; et
un microphone (1h) qui est disposé dans une cabine de l'ascenseur et recueille une annonce de guidage d'étage de service effectuée dans la cabine à l'arrivée de la cabine à un étage de service,
**caractérisé en ce que** la section d'établissement automatique de dictionnaire (1g) établit les mots d'étages de destination du dictionnaire de vocabulaire d'étages de destination (1d) utilisés dans la reconnaissance vocale sur la base de l'annonce de guidage d'étage de service recueillie par le microphone (1h).
